## Europäisches Patentamt
## European Patent Office
## Office européen des brevets

(19)

(11) Numéro de publication: **0 054 459**
**B1**

(12) **FASCICULE DE BREVET EUROPEEN**

(45) Date de publication du fascicule du brevet:
**04.09.85**

(51) Int. Cl.⁴: **G 01 S 7/42**, G 06 F 7/556

(21) Numéro de dépôt: **81401889.1**

(22) Date de dépôt: **27.11.81**

(54) **Dispositif de traitement de signaux logarithmiques, application à un radar fonctionnant en diversité de fréquence, et radar comportant un tel dispositif.**

(30) Priorité: **05.12.80 FR 8025909**

(43) Date de publication de la demande:
**23.06.82 Bulletin 82/25**

(45) Mention de la délivrance du brevet:
**04.09.85 Bulletin 85/36**

(84) Etats contractants désignés:
**DE GB IT NL SE**

(56) Documents cités:
**US - A - 4 121 212**

(73) Titulaire: **THOMSON-CSF, 173, Boulevard Haussmann, F-75379 Paris Cedex 08 (FR)**

(72) Inventeur: **Lassallette, Jean-Luc, THOMSON-CSF SCPI 173, bld. Haussmann, F-75360 Paris Cedex 08 (FR)**
Inventeur: **Lepere, Guy, THOMSON-CSF SCPI 173, bld. Haussmann, F-75360 Paris Cedex 08 (FR)**
Inventeur: **Rotat, Gérard, THOMSON-CSF SCPI 173, bld. Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

EP 0 054 459 B1

## Description

La présente invention concerne un dispositif de traitement de signaux logarithmiques destiné à délivrer le logarithme de la somme des signaux qui lui sont appliqués, sous leur forme logarithmique.

L'invention concerne également l'application directe de ce dispositif à un radar fonctionnant en diversité de fréquence et un radar à diversité de fréquence comprenant un tel dispositif.

Pour des raisons de facilité et de clarté de l'exposé, on considèrera, sans toutefois que cela doive constituer une quelconque limitation de l'invention, un radar fonctionnant en diversité de fréquence dans lequel on procède en vidéo à l'addition des signaux délivrés par les récepteurs, ces signaux étant exprimés sous leur forme logarithmique. Dans ces conditions, le dispositif de traitement de signaux logarithmique, objet de la demande de brevet, est décrit dans le cadre de son application.

Le traitement et les effets de la diversité de fréquence sont connus et ont été décrits dans la littérature; on citera par exemple: «David K. BARTON, RADARS, vol. 6, Frequency agility and diversity – The Artech Radar Library».

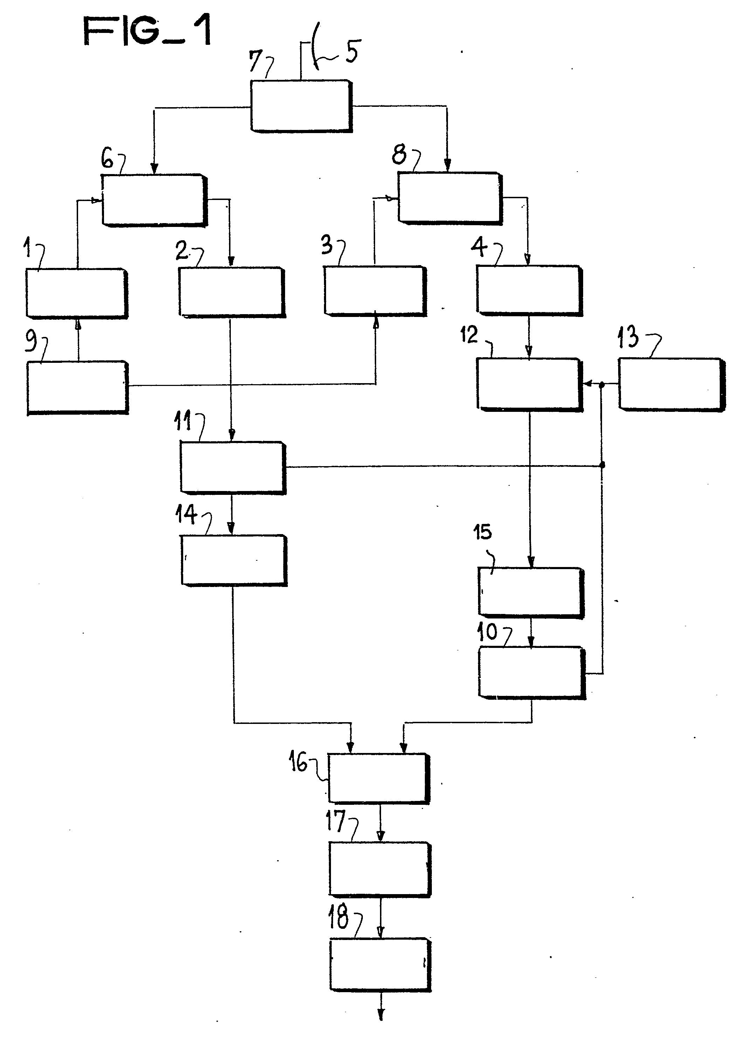

La figure 1 donne le diagramme schématique, classique d'un système radar fonctionnant en diversité de fréquence, dans lequel on procède à une recombinaison ou addition des signaux vidéo logarithmiques, dans le but d'obtenir à la sortie du dispositif le logarithme de la somme des signaux vidéo obtenus sous la forme de signaux analogiques.

Un radar fonctionnant en diversité de fréquence comprend deux émetteurs 1 et 3 et deux récepteurs 2 et 4. Chaque ensemble émetteur-récepteur fonctionne sur une fréquence différente soit F1 et F2. L'ensemble émetteur-récepteur 1–2 fonctionnant à la fréquence F1 par exemple, est connecté à l'antenne 5 à travers un circuit duplexeur 6 et un dispositif de filtrage 7 assurant à la réception la séparation des signaux reçus par l'antenne 5, suivant leur fréquence. De même l'ensemble émetteur-récepteur 3, 4 est connecté à l'antenne 5 à travers un circuit duplexeur 8 et le dispositif de filtrage 7. Pour ne pas alourdir la description, on suppose que les étages à fréquence intermédiaire, les oscillateurs locaux et les détecteurs sont contenus dans les émetteurs-récepteurs. De la sorte les signaux sortant des récepteurs 2 et 4 sont des signaux vidéo. Supposant que les récepteurs sont des récepteurs logarithmiques qui se caractérisent par une très grande dynamique, de l'ordre par exemple de 80 à 90 dB, les signaux sortant de ces récepteurs 2 et 4 sont des signaux vidéo logarithmiques référencés Log r1 et Log r2, les références r1 et r2 représentant les signaux vidéo sous leur forme analogique, appelée vidéo linéaire. Un générateur de synchronisation 9 est prévu dont les impulsions déclenchent les émetteurs 1 et 3. Ces impulsions sont toutefois décalées d'un intervalle de temps ΔT d'un émetteur à l'autre. A la réception également, les signaux vidéo issus des récepteurs sont décalés de cette valeur ΔT dans un circuit à retard 10, permettant une recombinaison dans le but de faire mieux ressortir les cibles mobiles.

Dans la figure 1, relative à l'art antérieur, le dispositif de traitement des signaux vidéo-logarithmique Log r1 et Log r2 fonctionne en numérique. Les signaux Log r1 et Log r2 sont alors en sortie du récepteur 2, 4 codés dans des codeurs 11, 12 contrôlés par les impulsions de l'horloge 13. Les impulsions sortant des codeurs 11 et 12 sont envoyées à des convertisseurs 14, 15 ou transcodeurs qui transforment les signaux logarithmiques en signaux linéaires soit r1 et r2 respectivement. Ces convertisseurs sont généralement des mémoires mortes ou PROM (programed read only memory) dont la capacité est importante si l'on veut conserver la grande dynamique caractéristique des signaux logarithmiques, le nombre de bits nécessaires pour ce faire étant très grand. Une des séries de signaux est alors retardée de la valeur ΔT, dans le circuit à retard 10 et les signaux «linéaires» r1 et r2 sont alors appliqués aux bornes d'un circuit additionneur 16 qui délivre la somme des signaux r1 et r2. Dans les conditions décrites, le circuit additionneur 16 est un circuit numérique réalisant l'addition bit à bit des mots binaires r1 et r2. Dans le cadre du radar, on effectue, sur la somme r1 + r2, une opération dite de normalisation dans un circuit 17 qui consiste à diviser la somme par $\sqrt{2}$, cette opération ayant pour effet la réduction du bruit lors de l'addition des signaux. Ce circuit de normalisation 16 est connecté à un circuit de transcodage 18 qui effectue le transcodage Lin vers Log et délivre à sa sortie S l'expression

$$\mathrm{Log}\,\frac{r1 + r2}{\sqrt{2}}$$

c'est-à-dire le logarithme de la somme des signaux r1 et r2, obtenue à partir des signaux Log r1 et Log r2.

Suivant l'art antérieur, on constate que la recombinaison signaux donnés sous leur forme logarithmique n'a pu se faire de façon directe et qu'il a fallu passer par les signaux vidéo retransformés en signaux vidéo linéaire. On constate d'autre part également que la dernière opération effectuée par le circuit de transcodage 18, qui délivre à nouveau la vidéo sommée, sous sa forme logarithmique, nécessite des tables de mémoires mortes PROM de très grande capacité, si l'on veut traiter toute la dynamique des signaux logarithmiques. A titre d'exemple, pour traiter des vidéos logarithmiques d'une dynamique de 80 à 90 dB, la table de transcodage Lin-Log peut avoir pour capacité 64K × 8 bits (16 bits d'adresse et 8 bits). Suivant l'art antérieur, il est souvent nécessaire pour diminuer le volume des mémoires mortes d'écrêter le signal du transcodage Log-Lin effectué dans le circuit de transcodage 11–12, provoquant une réduction de la dynamique de 20 dB.

La recombinaison dans le sens donné précédemment, de signaux logarithmiques présente donc un certain nombre d'inconvénients que précisément l'invention se propose de pallier.

L'invention a pour but de traiter les signaux logarithmiques d'une façon simple pour permettre leur recombinaison directement sans passer par une double transformation des signaux logarithmiques en signaux linéaires et vice-versa, tout en conservant leur grande dynamique et sans mettre en œuvre des tables de mémoires mortes de grande capacité.

Suivant l'invention, un dispositif de traitement de signaux logarithmiques fonctionnant en numérique, recevant au moins deux signaux sous leur forme logarithmique et délivrant un signal logarithmique de la somme desdits signaux sous le signe logarithme est caractérisé en ce que les signaux d'entrée sous une forme logarithmique soit Log r1 et Log r2 sont appliqués à un circuit soustracteur délivrant un signal logarithme du rapport desdits signaux soit

$$\text{Log } \frac{r1}{r2},$$

ledit circuit soustracteur étant connecté à un circuit de transcodage délivrant le signal

$$\text{Log } (1 + \frac{r1}{r2})$$

à un circuit d'addition recevant sur une seconde entrée le signal qui a été soustrait dans le circuit de soustraction.

Suivant une variante de l'invention, le dispositif de traitement comporte un circuit déterminant quel signal est maximal ou minimal parmi les signaux logarithmiques appliqués au dispositif.

D'autres avantages et caractéristiques de l'invention apparaîtront au cours de la description d'exemples de réalisation donnés à l'aide des figures qui représentent outre la figure 1, concernant l'art antérieur:

– la figure 2, un dispositif de traitement suivant l'invention;

– la figure 3, une variante du dispositif suivant l'invention;

– la figure 4, une réalisation plus détaillée du dispositif de la figure 3 et

– la figure 5, un diagramme schématique d'un dispositif complet de traitement pour l'addition d'une pluralité de signaux.

Ainsi que cela a été rapporté dans l'introduction, il apparaît difficile et coûteux d'effectuer la somme ou la recombinaison d'au moins deux signaux, lorsque ceux-ci sont disponibles sous leur forme logarithmique.

Suivant l'art antérieur qui a été rappelé, il est nécessaire pour obtenir le résultat cherché, de transformer les signaux reçus sous leur forme logarithmique, en leur forme linéaire, pour les additionner, puis de retransformer le signal somme ainsi obtenu pour l'obtenir sous sa forme logarithmique. Toutes ces opérations nécessitent un traitement des signaux réclamant un matériel abondant, principalement si l'on veut conserver l'avantage de la grande dynamique caractéristique des signaux logarithmiques.

Suivant l'invention, on réalise cette somme en procédant de façon directe, c'est-à-dire en évitant la double transformation des signaux, de leur forme logarithmique à leur forme analogique, puis de la forme analogique du résultat de l'opération d'addition à sa forme logarithmique.

La réalisation des dispositifs suivant l'invention est fondée sur l'observation suivante, que les signaux reçus sur lesquels on opère peuvent être traités de façon simple.

Les signaux d'entrée dans le cas où l'on dispose de deux signaux, sont représentés par l'expression

$$\text{Log } r1 \text{ et Log } r2.$$

Le dispositif suivant l'invention doit délivrer l'expression

$$\text{Log } (r1 + r2)$$

On notera que si par hypothèse le signal r1 est supérieur au signal r2, on peut écrire:

$$\text{Log } (r1 + r2) = \text{Log } r1 \left(1 + \frac{r2}{r1}\right)$$

$$= \text{Log } r1 + \text{Log } \left(1 + \frac{r2}{r1}\right)$$

Cette expression montre qu'il faut réaliser l'addition du signal Log r1 et du signal

$$\text{Log } \left(1 + \frac{r2}{r1}\right).$$

Pour calculer ce dernier signal, on détermine d'abord:

$$\text{Log } \frac{r2}{r1} = \text{Log } r2 - \text{Log } r1$$

et à partir de cette expression on calcule

$$\text{Log } \left(1 + \frac{r2}{r1}\right)$$

dans une mémoire morte PROM, programmée à cet effet.

Si le signal r2 est supérieur au signal r1, on détermine:

$$\text{Log } (r1 + r2) = \text{Log } r2 \left(1 + \frac{r1}{r2}\right)$$

$$= \text{Log } r2 + \text{Log } \left(1 + \frac{r1}{r2}\right).$$

On détermine de la sorte à partir des signaux d'entrée, l'opération:

$$\text{Log } r2 - \text{Log } r1 = \text{Log } \frac{r2}{r1}$$

puis

$$\text{Log } \left(1 + \frac{r2}{r1}\right)$$

dans une mémoire morte PROM.

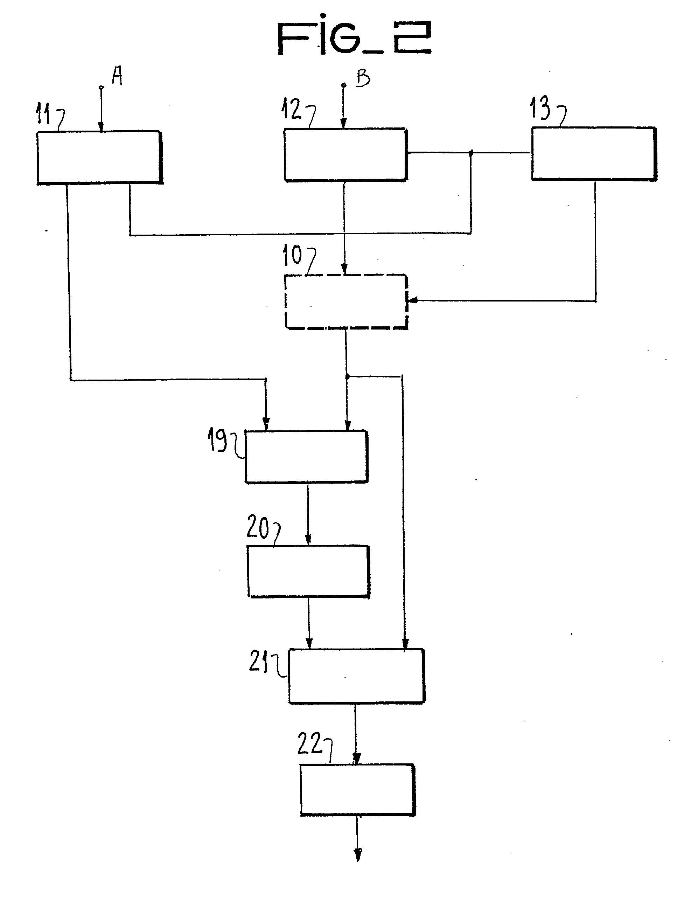

La figure 2 représente une première réalisation d'un dispositif suivant l'invention, dans lequel on utilise des opérateurs capables de traiter aussi bien des nombres positifs que des nombres négatifs. Dans ce cas il n'est pas nécessaire de faire une hypothèse sur la grandeur comparée des signaux r1 et r2. Les mots binaires représentatifs des expressions Log r1 et Log r2 comprennent un bit de signe dont il sera tenu compte dans le circuit de transcodage réalisant l'opération:

$$\text{Log} \left( 1 + \frac{r1}{r2} \right)$$

Le dispositif de la figure 2 comprend essentiellement un circuit de soustraction 19 auquel sont appliqués les signaux Log r1 et Log r2, codés préalablement dans les circuits de codage 11 et 12 contrôlés par l'horloge 13. Ce circuit de soustraction délivre l'expression différence des signaux appliqués, soit:

$$\text{Log } r1 - \text{Log } r2,$$

c'est-à-dire      $\text{Log } \dfrac{r1}{r2}$

Le circuit de soustraction 19 est connecté à un circuit de transcodage 20, mémoire morte PROM, qui réalise l'opération:

$$\text{Log} \left( 1 + \frac{r1}{r2} \right)$$

à partir du signal

$$\text{Log } \frac{r1}{r2}$$

qu'elle reçoit.
Suivant le signe du bit du signe de l'expression binaire du signal appliqué, cette mémoire 20 peut aussi bien donner le signal

$$\text{Log} \left( 1 + \frac{r2}{r1} \right)$$

Un circuit additionneur 21 reçoit d'une part l'expression

$$\text{Log} \left( 1 + \frac{r1}{r2} \right)$$

du circuit de transcodage 20 et d'autre part du circuit 12 l'expression Log r2 qui a été l'expression soustraite dans le soustracteur 19. Conformément au traitement qui a été décrit, le circuit d'addition 21 délivre l'expression cherchée Log (r1 + r2).

Dans l'application qui est faite de ce dispositif d'addition de signaux logarithmique à un radar à diversité de fréquence, le schéma de la figure 2 doit être complété. Un circuit retard 10, retardant un des signaux par rapport à l'autre de la valeur ΔT, déjà mentionnée est inséré dans la connexion reliant le codeur 12 au soustracteur 19. De plus, dans un radar diversité, on désire obtenir l'expression:

$$\text{Log} \frac{r1 + r2}{\sqrt{2}}$$

Dans ces conditions, cette expression peut s'écrire:

$$\text{Log} \frac{r1 + r2}{\sqrt{2}} = \text{Log} \frac{1}{\sqrt{2}} + \text{Log } (r1 + r2)$$

$$= \text{Log} \frac{1}{\sqrt{2}} + \text{Log} \left[ r1 \times (1 + \frac{r2}{r1}) \right]$$

$$= \text{Log} \frac{1}{\sqrt{2}} + \text{Log } r1 + \text{Log} \left( 1 + \frac{r2}{r1} \right)$$

On ajoute au dispositif de traitement qui a été décrit, un circuit dit de normalisation 22 qui détermine le facteur    $\text{Log} \dfrac{1}{\sqrt{2}}$

et effectue l'addition de ce facteur et du résultat délivré par le circuit de sommation 21. Cette opération revient à retrancher 3 dB au résultat délivré en numérique par le circuit d'addition 21.

On notera que dans cette réalisation, qui évite les transformations des expressions logarithmiques en expressions linéaires et vice-versa, la mémoire morte 20 a une capacité de l'ordre de $256 \times 8$ bits, capacité relativement faible par rapport à la capacité de la mémoire morte utilisée selon l'art antérieur.

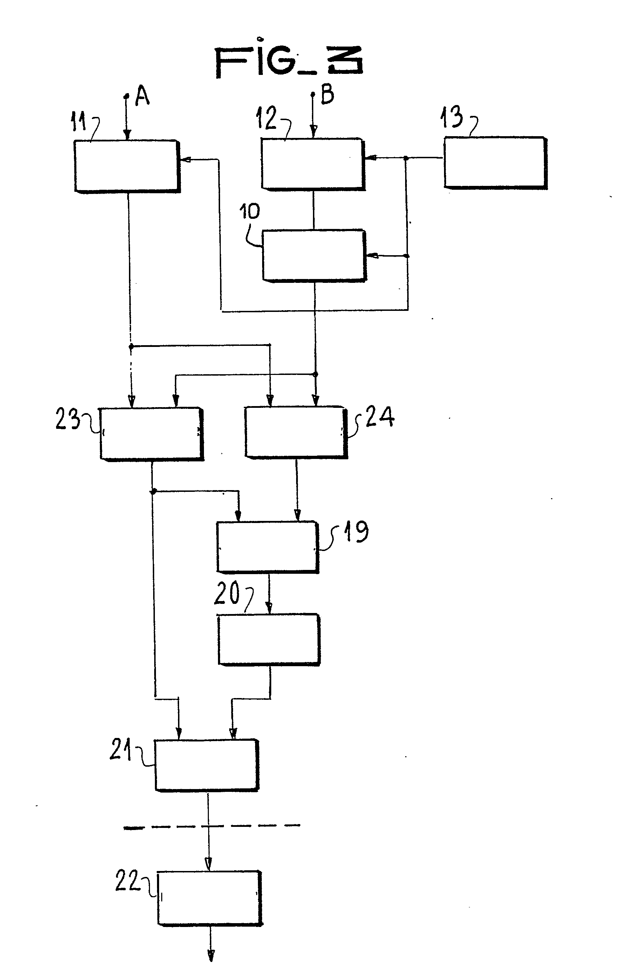

La figure 3 représente une variante du dispositif de la figure 2, dans laquelle on tient compte de la grandeur réciproque des expressions r1 et r2, ce qui a pour conséquence d'introduire un circuit de comparaison. De la figure 2 à la figure 3 par conséquent, les circuits exécutant les mêmes fonctions et situés dans une même position portent les mêmes références.

Les signaux Log r1 et Log r2 sont codés en numérique dans les codeurs 11 et 12 respectivement contrôlés par l'horloge 13. Ces codeurs sont connectés l'un et l'autre à deux comparateurs 23 et 24 qui ont pour fonction de déterminer, l'un 23 laquelle des expressions Log r1 et Log r2 est maximale et l'autre 24 laquelle des expressions Log r1 et Log r2 est minimale.

Les sorties de ces comparateurs 23, 24 sont connectées respectivement aux deux entrées du circuit de soustraction 19 qui effectue l'opération Log r1 − Log r2 si r1 est plus grand que r2 ou Log r2 − Log r1 si r2 est supérieur à r1. Le transcodeur 20 connecté au soustracteur 19 effectue suivant le cas, l'opération

$$\text{Log} \frac{r1}{r2} \text{ donnant Log} \left( 1 + \frac{r1}{r2} \right)$$

$$\text{Log} \frac{r2}{r1} \text{ donnant Log} \left( 1 + \frac{r2}{r1} \right)$$

Le circuit d'addition 21 est connecté d'une part au circuit de transcodage 20 et au comparateur 23 par exemple, dont il reçoit soit l'expression Log r1, soit l'expression Log r2. Cet additionneur 21 délivre l'expression cherchée Log (r1 + r2).

Le dispositif suivant l'invention, dans son application à un radar à diversité de fréquence comprend en outre, un circuit de retard 10 retardant les signaux Log r2 par exemple de la valeur T, circuit inséré entre codeur 12 et le comparateur 24, et un circuit 22 dit de normalisation et d'addition qui divise l'expression délivrée par le circuit 21, par $\sqrt{2}$ et fournit à sa sortie S l'expression

$$\text{Log} \frac{r1 + r2}{\sqrt{2}}$$

recherchée pour un radar.

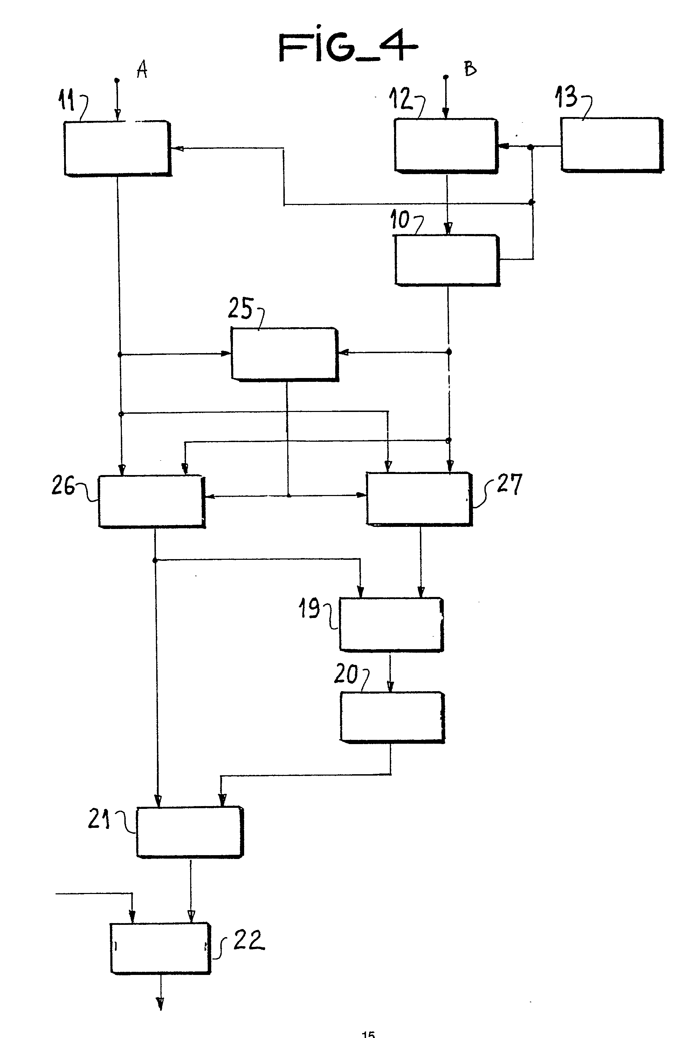

La figure 4 représente une réalisation plus détaillée du dispositif de la figure 3 dans laquelle les comparateurs 23 et 24 sont remplacés par un comparateur 25 et deux circuits multiplexeurs 26 et 27. Les codeurs 11 et 12 délivrent respectivement les expressions Log r1 et Log r2 sous la forme de deux mots binaires par exemple de 8 bits chacun. Ces mots sont appliqués respectivement aux deux entrées d'un comparateur 25 effectuant une comparaison bit à bit des deux mots binaires. L'un d'entre eux, dans le cas de l'application au radar à diversité de fréquence est retardé dans le circuit 10, imprimant un retard numérique ΔT, au mot numérique représentatif par exemple de Log r2. La sortie du comparateur 25 alimente d'une part le multiplexeur 26, connecté au codeur 11 et au codeur 12 éventuellement à travers le circuit à retard 10 et d'autre part le multiplexeur 27, connecté également au codeur 11 et au codeur 12 éventuellement à travers le circuit à retard 10. Ces multiplexeurs sont en fait des commutateurs électroniques commandés par le bit de comparaison délivré par le comparateur 25 qui sont ouverts suivant que les expressions Log r1 et Log r2 sont maximales ou minimales. Suivant le cas alors et tout comme cela a été expliqué à propos de la figure précédente, le soustracteur 19 auquel sont connectés les multiplexeurs 26 et 27, exécute la fonction Log r1 – Log r2 ou Log r2 – Log r1. Le transcodeur 20 connecté au soustracteur 19 et qui est par exemple une mémoire morte PROM de capacité 256 × 8 exécute la fonction

$$\text{Log}\left(1 + \frac{r1}{r2}\right) \text{ ou } \text{Log}\left(1 + \frac{r2}{r1}\right)$$

qu'il transmet à l'additionneur 21 recevant par ailleurs Log r1 ou Log r2 suivant que cette expression est plus grande que l'autre. Dans l'application au radar, un circuit additionneur 22 exécute la fonction

$$\text{Log} \frac{r1 + r2}{\sqrt{2}}$$

qu'il délivre sous forme d'un mot binaire à 8 bits.

On a ainsi décrit un dispositif de traitement de signaux logarithmiques réalisant la combinaison d'au moins deux signaux numériques donnés sous leur forme logarithmique.

On a décrit également, l'application d'un tel dispositif, à un radar à diversité de fréquence, fonctionnant sur deux fréquences différentes et dont les émetteurs sont déclenchés, décalés l'un par rapport à l'autre d'un intervalle de temps ΔT.

Toutefois, le dispositif suivant l'invention n'est pas limité au traitement de deux signaux. Fonctionnant d'une manière semblable à celle décrite il peut traiter trois signaux ou plus. De fait si Log r1, Log 2r et Log r3 sont trois signaux exprimés sous leur forme logarithmique, qui peuvent bien évidemment être les signaux vidéo d'un radar à diversité de fréquence fonctionnant sur trois fréquences différentes F1, F2, F3, un premier dispositif conformément à l'un de ceux décrits, figure 2 ou figure 3 peut effectuer le calcul sur Log r1 et Log r2 délivrant Log (r1 + r2). Ce signal est traité dans un dispositif du même genre avec le signal Log r3. Si le nombre des signaux logarithmiques augmente, il est toujours possible de proche en proche d'effectuer le traitement des signaux jusqu'à obtention du résultat final cherché Log (r1 + r2 + r3 ... + rn).

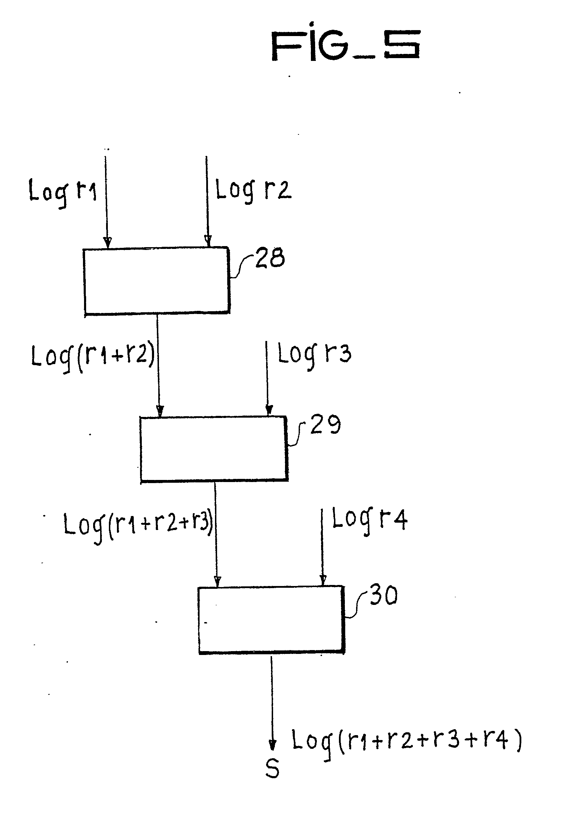

La figure 5 donne un diagramme schématique d'un dispositif complet de traitement d'une pluralité de signaux logarithmiques destiné à délivrer sous sa forme logarithmique la somme des signaux apparaissant sous le signe logarithme.

Dans cette figure 5, on voit clairement comment sont disposés les différents circuits de traitement utilisés 28, 29, 30, le traitement de l'ensemble des signaux étant réalisé sous forme itérative. Dans le cas de l'application au radar à diversité de fréquence, chaque dispositif de traitement comportera en outre un circuit dit de normalisation, et un circuit de retard dont le retard variera de la valeur ΔT d'un dispositif à l'autre, le premier circuit à retard donnant un retard ΔT, le second dans le second dispositif de traitement un retard 2 ΔT et ainsi de suite.

On a ainsi décrit un dispositif de traitement de signaux logarithmiques opérant la recombinaison de ces signaux de façon à délivrer leur somme sous la forme logarithmique. On a décrit également l'application d'un tel dispositif de traitement à un radar à diversité de fréquence et également un radar comportant un tel dispositif.

**Revendications**

1. Dispositif de traitement de signaux logarithmiques, fonctionnant en numérique, recevant au moins deux signaux (r1, r2) sous leur forme logarithmique (Log r1, Log r2) et délivrant un signal logarithmique de la somme desdits signaux sous le signe logarithme Log (r1 + r2), caractérisé en ce que les signaux appliqués aux entrées (A, B) du dispositif sous leur forme logarithmique (Log r1 et Log r2) sont appliqués à un circuit de soustraction (19) délivrant un signal logarithmique du rapport desdits signaux

$$\left(\text{Log} \frac{r1}{r2}\right),$$

ledit circuit soustracteur (19) étant connecté à un circuit de transcodage (20) délivrant le signal Log

$$\left(1 + \frac{r1}{r2}\right),$$

à un circuit d'addition (21) recevant sur une seconde entrée le signal qui a été soustrait dans le circuit de soustraction (19).

2. Dispositif de traitement suivant la revendication 1, caractérisé en ce qu'il comporte deux circuits de comparaison (23–24) recevant les signaux logarithmiques (Log r1 et Log r2) et déterminant lequel desdits signaux (Log r1, Log r2) est maximal ou minimal, la sortie de chacun de ces circuits de comparaison étant connectée au circuit de soustraction (19).

3. Dispositif de traitement suivant la revendication 2, caractérisé en ce que les circuits de comparaison (23–24) sont constitués par un seul circuit de comparaison connecté aux entrées (A, B) du dispositif où sont appliqués les signaux logarithmiques à recombiner et deux circuits multiplexeurs (26–27) choisissant sous la commande du signal de sortie du comparateur (25) le signal logarithmique le plus grand ou le plus petit, les deux circuits multiplexeurs (26–27) étant de plus connectés tous deux aux deux entrées (A, B) du dispositif.

4. Dispositif de traitement suivant la revendication 1, caractérisé en ce que le circuit de transcodage (20) est constitué par une mémoire morte PROM.

5. Dispositif de traitement suivant la revendication 4, caractérisé en ce que la mémoire morte a une capacité de l'ordre de $256 \times 8$ bis.

6. Utilisation du dispositif de traitement suivant l'une quelconque des revendications 1 à 5, dans un radar à diversité de fréquence fonctionnant sur deux fréquences différentes (F1, F2) dont les émissions sont décalées d'un intervalle de temps $\Delta T$, et dont les récepteurs délivrent des signaux vidéo sous forme logarithmique (Log r1, Log r2), qui sont codés dans des circuits de codage appropriés, caractérisé en ce que le dispositif de traitement desdits signaux comporte en outre, un circuit à retard (10) connecté à la sortie d'un des codeurs (12) et un circuit de normalisation et d'addition (22) connecté à la sortie du circuit additionneur (21) du dispositif et exécutant l'opération

$$\text{Log} \frac{1}{\sqrt{2}} + \text{Log} (r1 + r2)$$

et délivrant le signal vidéo cherché

$$\left(\text{Log} \frac{r1 + r2}{\sqrt{2}}\right).$$

7. Dispositif de traitement recevant plus de deux signaux sous leur forme logarithmique, caractérisé en ce qu'il comprend une pluralité de dispositifs suivant la revendication 1, connectés en série les uns aux autres, chacun recevant comme signaux d'entrée le signal de sortie du dispositif précédent et un signal logarithmique d'entrée non encore traité.

8. Utilisation du dispositif de traitement suivant la revendication 7, dans un radar à diversité de fréquence, fonctionnant sur plusieurs fréquences, dont les émissions sont décalées les unes par rapport aux autres d'un intervalle de temps $\Delta T$, et dont les récepteurs délivrent des signaux vidéo sous leur forme logarithmique, codés dans des circuits de codage appropriés, caractérisée en ce que chaque dispositif de traitement comprend connecté à un codeur recevant un des signaux vidéo, un dispositif à retard imprimant un retard $(n-1)\,\Delta T$ pour le rendre synchrone de l'autre signal et un circuit de normalisation constituant la sortie du dispositif de traitement, connectée au dispositif de traitement suivant, n étant le nombre des signaux vidéo logarithmiques traités.

**Patentansprüche**

1. Vorrichtung zur Verarbeitung von logarithmischen Signalen, welche digital arbeitet, wenigstens zwei Signale (r1, r2) in logarithmischer Form (Log r1, Log r2) empfängt und ein logarithmisches Signal der Summe der genannten Signale unter dem logarithmischen Zeichen Log (r1 + r2) abgibt, dadurch gekennzeichnet, dass die an die Eingänge (A, B) der Vorrichtung in logarithmischer Form (Log r1 und Log r2) angelegten Signale an eine Subtrahierschaltung (19) angelegt sind, welche ein logarithmisches Signal für das Verhältnis der genannten Signale

$$\text{Log} \frac{r1}{r2}$$

abgibt, wobei die genannte Subtrahierschaltung (19) an eine Umcodierschaltung (20) angeschlossen ist, welche das Signal

$$\text{Log} (1 + \frac{r1}{r2})$$

an eine Addierschaltung (21) abgibt, welche an einem zweiten Eingang das Signal empfängt, das in der Subtrahierschaltung (19) subtrahiert wurde.

2. Verarbeitungsvorrichtung nach Anspruch 1, dadurch gekennzeichnet, dass sie zwei Vergleicherschaltungen (23–24) enthält, welche die logarithmischen Signale (Log r1 und Log r2) empfängt und bestimmt, welches der genannten Signale (Log r1, Log r2) maximal oder minimal ist, wobei der Ausgang jeder dieser Vergleicherschaltungen mit der Subtrahierschaltung (19) verbunden ist.

3. Verarbeitungsvorrichtung nach Anspruch 2, dadurch gekennzeichnet, dass die Vergleicherschaltungen (23–24) durch eine einzige Vergleicherschaltung gebildet sind, die mit den Eingängen (A, B) der Vorrichtung verbunden ist, woran die zu rekombinierenden logarithmischen Signale angelegt sind, sowie durch zwei Multiplexerschaltungen (26–27) gebildet sind, die unter Steuerung durch das Ausgangssignal des Vergleichers (25) das grösste oder das kleinste logarithmische Signal auswählen, wobei die zwei Multiplexerschaltungen (26–27) ferner beide mit den zwei Eingängen (A, B) der Vorrichtung verbunden sind.

4. Verarbeitungsvorrichtung nach Anspruch 1, dadurch gekennzeichnet, dass die Umcodierschaltung (20) durch einen PROM-Festwertspeicher gebildet ist.

5. Verarbeitungsvorrichtung nach Anspruch 4, dadurch gekennzeichnet, dass der Festwertspeicher eine Kapazität in der Grössenordnung von 256 × 8 Bits aufweist.

6. Verwendung der Verarbeitungsvorrichtung nach einem der Ansprüche 1 bis 5 in einem Radar mit Frequenz-Diversity, welches auf zwei verschiedenen Frequenzen (F1, F2) arbeitet, deren Ausstrahlungen um ein Zeitintervall $\Delta T$ versetzt erfolgen, wovon die Empfänger Videosignale in logarithmischer Form (Log r1, Log r2) abgeben, die in geeigneten Codierschaltungen codiert werden, dadurch gekennzeichnet, dass die Vorrichtung zur Verarbeitung der genannten Signale ferner eine Verzögerungsschaltung (10), die an den Ausgang eines der Codierer (12) angeschlossen ist, und eine Normier- und Addierschaltung (22) umfasst, welche an den Ausgang der Addierschaltung (21) der Vorrichtung angeschlossen ist und folgende Operation durchführt.

$$Log \frac{1}{\sqrt{2}} + Log\ (r1\ +\ r2)$$

und das gesuchte Videosignal abgibt

$$\left( Log \frac{r1\ +\ r2}{\sqrt{2}} \right).$$

7. Verarbeitungsvorrichtung, welche mehr als zwei Signale in logarithmischer Form empfängt, dadurch gekennzeichnet, dass sie eine Mehrzahl von Vorrichtungen nach Anspruch 1 enthält, die miteinander in Reihe geschaltet sind und von denen jede als Eingangssignale das Ausgangssignal der vorausgehenden Vorrichtung sowie ein logarithmisches, noch nicht bearbeitetes Eingangssignal empfängt.

8. Verwendung der Verarbeitungsvorrichtung nach Anspruch 7 in einem Radar mit Frequenz-Diversity, welches auf mehreren Frequenzen arbeitet, deren Ausstrahlungen gegeneinander um ein Zeitintervall $\Delta T$ erfolgen, und wovon die Empfänger Videosignale in logarithmischer Form abgeben, die in geeigneten Codierschaltungen codiert werden, dadurch gekennzeichnet, dass jede Verarbeitungsvorrichtung eine an einen Codierer, welcher eines der Videosignale empfängt, angeschlossene Verzögerungsvorrichtung enthält, die eine Verzögerung $(n-1)\ \Delta T$ herbeiführt, um es synchron mit dem anderen Signal zu machen, und eine Normierschaltung enthält, welche den Ausgang der Verarbeitungsvorrichtung bildet und an die darauffolgende Verarbeitungsvorrichtung angeschlossen ist, wobei n die Anzahl von verarbeiteten logarithmischen Videosignalen ist.

## Claims

1. Digitally operating device for the processing of logarithmic signals, receiving at least two signals (r1, r2) in logarithmic form (Log r1, Log r2) and supplying a logarithmic signal of the sum of said signals in the logarithmic shape Log (r1 + r2), characterized in that the signals applied to the inputs (A, B) of the device in logarithmic form (Log r1 and Log r2) are applied to a subtracting circuit (19) supplying a logarithmic signal of the ratio of said signals

$$\left( Log \frac{r1}{r2} \right),$$

said subtracting circuit (19) being connected to a transcoding circuit (20) supplying the signal Log

$$\left( 1 + \frac{r1}{r2} \right)$$

to an adding circuit (21) receiving on a second input the signal which has been subtracted in the subtracting circuit (19).

2. Processing device according to claim 1, characterized in that it comprises two comparator circuits (23–24) receiving the logarithmic signals (Log r1 and Log r2) and determining which of said signals (Log r1, Log r2) is maximum or minimum, the output of each of these comparator circuits being connected to the subtracting circuit (19).

3. Processing device according to claim 2, characterized in that the comparator circuits (23–24) are formed of a single comparator circuit connected to the inputs (A, B) of the device whereto the logarithmic signals to be recombined are applied, and of two multiplexer circuits (26–27) selecting, under control of the output signal of the comparator (25), the greatest or the smallest logarithmic signal, the two multiplexer circuits (26–27) being further both connected to the two inputs (A, B) of the device.

4. Processing device according to claim 1, characterized in that the transcoding circuit (20) is formed of a PROM read only memory.

5. Processing device according to claim 4, characterized in that the read only memory has a capacity of the order of 256 × 8 bits.

6. Use of the processing device according to any of claims 1 to 5 in a radar with frequency diversity operating on two different frequencies (F1, F2) the transmissions of which are shifted by a time interval $\Delta T$, and the receivers of which supply video signals in logarithmic form (Log r1, Log r2) which are coded in appropriate coding circuits, characterized in that the device for the processing of said signals further comprises a delay circuit (10) connected to the output of one of the coders (12) and a standardizing and adding circuit (22) connected to the output of the adding circuit (21) of the device and performing the operation

$$Log \frac{1}{\sqrt{2}} + Log\ (r1\ +\ r2)$$

and supplying the desired video signal

$$\left(\text{Log } \frac{r1 + r2}{\sqrt{2}}\right).$$

7. Processing device receiving more than two signals in logarithmic form, characterized in that it comprises a plurality of devices according to claim 1 which are connected in series with each other, each receiving, as its input signal, the output signal of the preceding device and a logarithmic input signal which has not yet been processed.

8. Use of the processing device according to claim 7 in a radar with frequency diversity operating on a plurality of frequencies and the transmissions of which are shifted with respect to each other by a time interval $\Delta T$, and the receivers of which supply video signals in logarithmic form which are coded in appropriate coding circuits, characterized in that each processing device comprises, connected to a coder receiving one of the video signals, a delay device introducing a delay $(n-1)\,\Delta T$ in order to make it synchronous with the other signal, and a standardizing circuit forming the output of the processing device and connected to the following processing device, n being the number of processed logarithmic video signals.

# FIG_1

# FIG_2

# FIG_3

# FiG_4

# FIG_5

Log r1    Log r2

[28]

Log(r1+r2)    Log r3

[29]

Log(r1+r2+r3)    Log r4

[30]

Log(r1+r2+r3+r4)

S